Europäisches Patentamt

European Patent Office

Office européen des brevets

(19)

(11) Numéro de publication : **0 060 168**
**B1**

(12) **FASCICULE DE BREVET EUROPÉEN**

(45) Date de publication du fascicule du brevet :
17.07.85

(51) Int. Cl.⁴ : **F 02 C   9/26**

(21) Numéro de dépôt : 82400295.0

(22) Date de dépôt : 19.02.82

(54) **Limiteur d'accélération pour turbomachine.**

(30) Priorité : 06.03.81 FR 8104464

(43) Date de publication de la demande :
15.09.82 Bulletin 82/37

(45) Mention de la délivrance du brevet :
17.07.85 Bulletin 85/29

(84) Etats contractants désignés :
DE FR GB

(56) Documents cités :
FR-A-   918 129
FR-A- 1 011 263
FR-A- 1 093 476
FR-A- 2 220 674
US-A- 3 017 922
US-A- 3 121 456
US-A- 3 878 678

(73) Titulaire : SOCIETE NATIONALE D'ETUDE ET DE
CONSTRUCTION DE MOTEURS D'AVIATION,
"S.N.E.C.M.A."
2 Boulevard Victor
F-75015 Paris (FR)

(72) Inventeur : Aurousseau, Christian
Appt 43, quartier A. Camus
F-77190 Dammarle les Lys (FR)
Inventeur : Odeyer, Pierre Paul Louis
18, boulevard Saint Jacques
F-75014 Paris (FR)

(74) Mandataire : Molnat, François et al
S.N.E.C.M.A. Service des Brevets Boîte Postale 81
F-91003 Evry Cedex (FR)

Jouve, 18, rue St-Denis, 75001 Paris, France

## Description

La présente invention concerne un limiteur d'accélération pour turboréacteur destiné à protéger le turboréacteur d'un décrochage du compresseur ou d'une surchauffe de la turbine.

On sait que les conditions de fonctionnement d'un turboréacteur, aussi bien en fonctionnement stabilité qu'en période d'accélération, sont régies par la richesse, qui varie comme le rapport C/P du débit de carburant C à une pression caractéristique P liée au débit d'air traversant la chambre de combustion, notamment la pression de refoulement P2 du compresseur. En particulier, le rapport caractéristique C/P ne doit pas dépasser un maximum déterminé, pour éviter les risques de décrochage du compresseur.

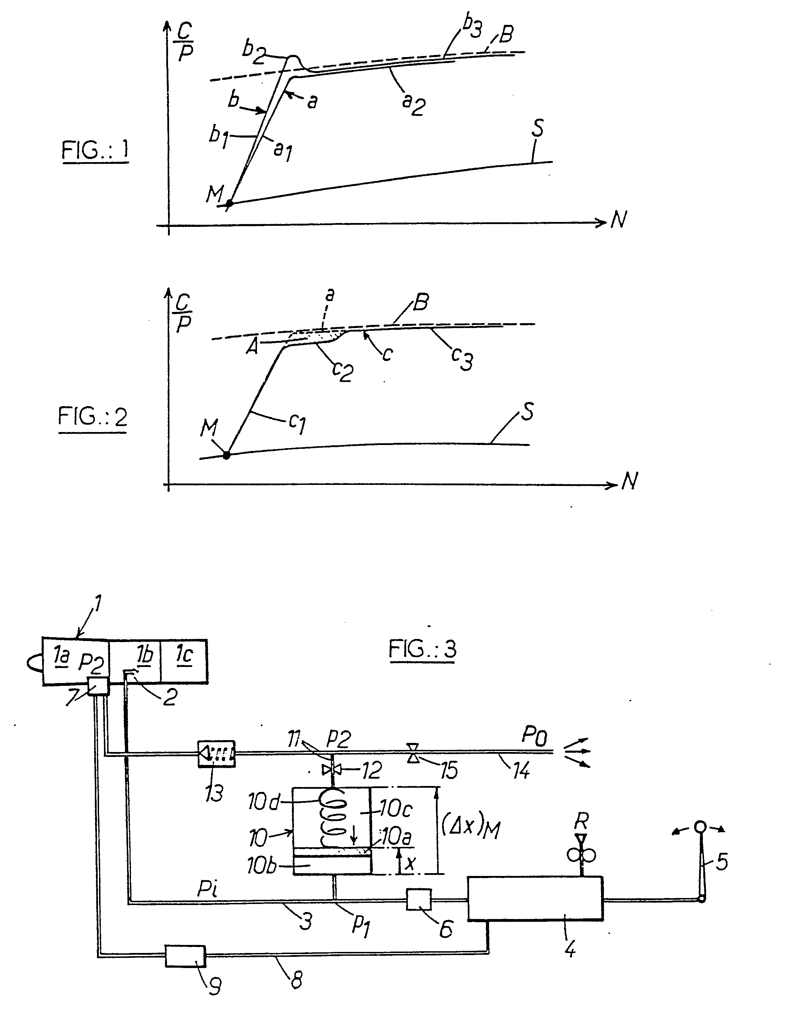

A cet effet, le régulateur du débit de carburant envoyé aux injecteurs est généralement muni d'un dispositif spécial, désigné sous le nom de « butée d'accélération », dont la fonction est illustrée sur la figure 1 du dessin annexé. Ce diagramme représente les variations du rapport caractéristique C/P en fonction de la vitesse de rotation N de la turbine dans différentes conditions de fonctionnement. La courbe 5 correspond au fonctionnement stable du turboréacteur, correspondant par exemple à une vitesse de croisière uniforme de l'avion sur lequel il est monté. La courbe en traits interrompus B correspond aux limites supérieures, qui sont imposées au rapport caractéristique C/P par le dispositif mentionné de butée d'accélération. Grâce à ce dispositif, en cas d'accélération brusque du débit de carburant C, due à une action brutale sur la manette des gaz, le point de fonctionnement du turboréacteur décrit, en partant par exemple du point de fonctionnement stable M, une courbe telle que a, comprenant un flanc de montée plus ou moins raide, a1 suivi par un arc a2 montant lentement un peu en dessous de la courbe limite B.

Cependant, dans le cas particulier d'un turboréacteur monté sur un avion, il peut se produire que la régulation de débit présente une caractéristique telle que, par suite d'une action brutale sur la manette des gaz, elle induise un débit tel que la courbe correspondante décrite par le point de fonctionnement b présente non seulement un flanc montant b1, mais que, avant l'établissement de l'arc b3 imposé par la butée d'accélération, le point de fonctionnement dépasse la courbe limite B avec une amplitude b2 plus ou moins importante. En l'absence de dispositions spéciales, il en résulterait un décrochage du compresseur ou une surchauffe de la turbine.

Pour éviter de tels inconvénients, on a déjà eu recours à un ou plusieurs accumulateurs hydrauliques, reliés au circuit d'alimentation des injecteurs de carburant, ces accumulateurs ayant pour effet d'absorber le débit excessif de carburant correspondant au dépassement b2 sur le diagramme b de la figure 1. Cette disposition connue permet de faire correspondre, à une accélération brusque du débit de carburant, une évolution du point de fonctionnement du turboréacteur correspondant sensiblement au diagramme c de la figure 2 ; avec un tel diagramme de fonctionnement, le point de fonctionnement ne passe jamais au-dessus de la courbe limite B, imposée par la butée d'accélération (les deux parties c1 et c3 de la courbe étant raccordées par un palier c2 qui délimite, avec la partie correspondante de la courbe a (figure 1), une aire A, sensiblement proportionnelle au volume interne de l'accumulateur hydraulique).

L'emploi d'un accumulateur hydraulique usuel, à piston et ressort, n'est cependant pas tout-à-fait satisfaisant, pour la raison suivante : la position axiale x de son piston, de surface S', est reliée à la pression d'injection du carburant Pi qui agit sur une face dudit piston, ainsi qu'à la raideur k du ressort et à la pression ambiante Po, qui agissent sur son autre face, par la relation :

$$Pi = (k \cdot x)/S' + Po. \qquad (1)$$

Comme cependant le dimensionnement du cylindre de l'accumulateur limite la variation maximale possible $\Delta x$, de la position de son piston, l'accumulateur n'est utilisable que dans les limites suivantes de variation de la pression d'injection :

$$\Delta Pi = (k/S')\Delta x ; \qquad (2)$$

Il s'ensuit que les contraintes mécaniques et dimensionnelles imposées à la réalisation d'un tel accumulateur rendent sa gamme d'utilisation $\Delta Pi$ notablement inférieure à la gamme des variations nécessaires de la pression d'injection Pi, dans le cas notamment des avions pouvant voler à haute altitude.

On connaît aussi d'autres applications des accumulateurs hydrauliques aux circuits d'alimentation en carburant des turboréacteurs. FR-A-2 220 674 concerne une pompe à cylindrée variable pour un système d'alimentation en carburant dans lequel un accumulateur comporte un diaphragme chargé par un ressort et par une pression de sortie de compresseur appliquée du côté opposé à une chambre reliée au circuit de carburant, en amont des injecteurs. Cet accumulateur a pour but de maintenir la pression d'injection de carburant durant les phases d'aspiration de la pompe à cylindrée variable, en fonctionnement continu et pendant les phases stabilisées de la machine.

Le brevet français n° 968 718 de ROLLS ROYCE LTD décrit un dispositif d'alimentation et de démarrage d'une turbine à gaz, comportant un accumulateur à piston et à ressort, dont une première chambre est remplie de carburant par le circuit d'alimentation des injecteurs lorsque la turbine fonctionne en régime permanent. Au démarrage, les gaz sous pression produits par une cartouche refoulent notamment un liquide remplissant la seconde chambre de l'accumulateur, de façon à alimenter suffisamment les injecteurs.

Le brevet français n° 1 236 941 de BRISTOL SIDDELEY ENGINES décrit également un dispositif pour l'alimentation en combustible d'une turbine à gaz, comportant un accumulateur hydraulique, associé notamment au circuit d'alimentation des brûleurs de post-combustion de cette turbine. US-A-3 017 922 décrit un système d'alimentation en carburant comportant un accumulateur du type élémentaire à ressort relevé ci-dessus. La question d'utiliser des caractéristiques variables a été posée mais aucune solution n'est proposée et cet élément n'a pas été retenu ni explicité.

Le limiteur d'accélération pour turboréacteur selon la présente invention comporte également au moins un accumulateur hydraulique relié au circuit d'alimentation des injecteurs de carburant, mais il est réalisé de manière que cet accumulateur puisse intervenir pour absorber les éventuelles pointes d'accélération du débit de carburant, dans une gamme de pression d'injection, très élargie par rapport à celle qui peut être couverte par les accumulateurs hydrauliques usuels, précédemment mentionnés, de façon notamment à préserver l'efficacité du limiteur d'accélération à toutes les altitudes que peut atteindre l'avion équipé du turboréacteur.

Le limiteur d'accélération pour turboréacteur selon la présente invention comporte un accumulateur hydraulique du type précité dans lequel le piston de l'accumulateur hydraulique divise son cylindre en une première chambre, reliée à un point du circuit d'alimentation des injecteurs, situé en amont de ces derniers, et en une seconde chambre, reliée à la sortie du compresseur, et que des moyens élastiques agissent sur le piston de l'accumulateur dans le sens tendant à une réduction du volume de sa première chambre.

Si l'on désigne en effet par P2 la pression à la sortie du compresseur du turboréacteur, on peut montrer que la relation (1) précédemment indiquée est remplacée par

$$Pi = (k \cdot x)/S' + P2 \qquad (3)$$

et que, par suite, la relation (2) devient

$$\Delta Pi = (k \cdot \Delta x)/S' + \Delta P2 \qquad (4)$$

Dans cette dernière relation, $\Delta P2$ désigne la variation de la pression de refoulement du compresseur en fonction notamment de l'altitude, P2 diminuant lorsque l'altitude augmente. Comme il résulte des définitions précédentes que $\Delta x$ et $\Delta P2$ sont des grandeurs positives, on voit que le limiteur d'accélération selon la présente invention permet d'accroître, notamment de $\Delta P2$, la gamme des pressions d'injection $\Delta Pi$ qui peut être couverte avec un accumulateur hydraulique déterminé, dont le dimensionnement fixe les grandeurs k, $\Delta x$ et S'. Inversement, la présente invention permet de couvrir une gamme déterminée de variation de la pression d'injection du carburant $\Delta Pi$ en utilisant un accumulateur hydraulique sous-dimensionné par rapport à l'accumulateur usuel qui serait nécessaire pour couvrir la même gamme $\Delta Pi$.

Le limiteur d'accélération selon la présente invention est caractérisé en ce qu'un diaphragme, de préférence réglable en réception, est inséré entre la seconde chambre de l'accumulateur et la sortie du compresseur. Cette disposition offre l'avantage d'introduire une raideur supplémentaire, notamment réglable en réception, s'ajoutant à celle du ressort lors d'un déplacement rapide du piston de l'accumulateur. Le réglage en réception de ce diaphragme permet d'ajuster la valeur en transitoire du coefficient k dans la formule (4) précédente, afin de l'adapter à la gamme des pressions d'injection $\Delta Pi$ qui doit être couverte. En outre, pour éviter que les petites quantités de carburant, qui pourraient passer éventuellement de la première chambre de l'accumulateur à sa seconde chambre, dans le cas où l'étanchéité de son piston ne serait pas parfaite, ne puissent parvenir jusqu'au compresseur, la présente invention prévoit les dispositions suivantes, de préférence en combinaison l'une avec l'autre :

a) un clapet anti-retour est inséré entre la seconde chambre de l'accumulateur et la sortie du compresseur ;

b) la conduite reliant la seconde chambre de l'accumulateur à la sortie du compresseur comporte, en un point situé en amont du clapet anti-retour, une dérivation qui communique avec l'atmosphère à travers un diaphragme, de façon que les faibles fuites de carburant puissent être drainées et rejetées dans l'atmosphère à travers ce diaphragme et qui permet que la pression dans la seconde chambre de l'accumulateur soit égale à la pression de refoulement du compresseur.

A titre d'exemple, on a décrit ci-dessous et illustré schématiquement au dessin annexé une forme de réalisation du limiteur d'accélération pour turboréacteur selon la présente invention.

Les figures 1 et 2 sont deux diagrammes déjà mentionnés précédemment.

La figure 3 est le schéma de la forme de réalisation de l'invention, qui va être maintenant décrite à titre d'exemple non limitatif.

Sur la figure 3, on a représenté en 1 un turboréacteur, dont on a désigné par 1a le compresseur, 1b la ou les chambres de combustion et 1c la turbine. Dans la chambre de combustion 1b sont disposés des injecteurs tels que 2 qui sont alimentés en carburant par le circuit suivant : le carburant provenant d'un réservoir R est envoyé vers les injecteurs tels que 2, par au moins une conduite 3 dans laquelle sont insérés tout d'abord un régulateur 4 d'un type connu commandé par une manette des gaz 5 et en amont des injecteurs tels que 2, un distributeur-purgeur 6. A la sortie du compresseur, où règne une pression P2, est disposée une prise d'air, qui débouche dans un filtre 7 ; une première conduite 8 relie la sortie de ce filtre 7 à une entrée du régulateur 4, en traversant un correcteur de butée 9 d'un type connu. C'est ce dernier dispositif, associé au régulateur 4, qui assure la fonction de butée d'accélération, à laquelle correspondent les courbes en traits interrompus B sur les diagrammes des figures 1 et 2. Ces dispositifs étant connus et ne faisant pas partie de l'invention, il n'est pas nécessaire de les décrire en détail.

Le dispositif selon la présente invention comporte un accumulateur hydraulique 10, dont le piston 10a divise le cylindre en une première chambre 10b reliée à un point p1 de la canalisation 3 d'alimentation des injecteurs tels que 2, qui est situé en amont desdits injecteurs 2, et en particulier, dans l'exemple de réalisation considéré, entre la sortie du distributeur-purgeur 6 et la rampe des injecteurs tels que 2, et en une seconde chambre 10c reliée de la façon suivante à la sortie du compresseur : une conduite de liaison 11 part de la chambre 10c de l'accumulateur hydraulique 10 pour aboutir à une seconde sortie du filtre 7 ; dans cette conduite 11 sont insérés, tout d'abord, à proximité immédiate de l'accumulateur hydraulique, un premier diaphragme réglable 12, puis, entre ce diaphragme 12 et le filtre 7, un clapet antiretour 13 qui est monté de façon à laisser passer l'air à la pression P2, provenant de la sortie du compresseur en direction de la chambre 10c de l'accumulateur 10. En outre, dans la forme de réalisation considérée, un point p2 de la conduite 11, qui est situé entre le diaphragme réglable 12 et le clapet anti-retour 13, est relié par une conduite 14 à la pression ambiante Po, dans une boîte à purge par exemple ; par ailleurs, un diaphragme, éventuellement réglable 15 est inséré dans la conduite 14. Enfin, un ressort 10d est placé dans la seconde chambre 10c de l'accumulateur hydraulique 10 de façon à agir sur son piston 10a dans le sens tendant à une réduction du volume de sa première chambre 10b, c'est-à-dire dans le sens descendant, indiqué par une flèche sur la figure 3.

Le mode de fonctionnement de ce limiteur d'accélération selon la présente invention est le suivant.

En fonctionnement stabilisé du turboréacteur 1, le piston 10a de l'accumulateur hydraulique 10 occupe une position fixe dans le cylindre de l'accumulateur ; cette position du piston 10a correspond à l'équilibre des forces qu'exercent, d'une part, sur sa face inférieure, la pression Pi du carburant circulant dans la conduite 3 en direction des injecteurs tels que 2 et, d'autre part, sur sa face supérieure, la pression à la sortie du compresseur P2 transmise dans la seconde chambre 10c de l'accumulateur 10 par l'intermédiaire des composants 7-13-11-12, ainsi que le ressort 10d de raideur k. Cette position d'équilibre x du piston 10a de l'accumulateur 10 est définie par la relation (3) qui a été indiquée précédemment. Si une action brusque, et de grande amplitude, est exercée sur la manette des gaz 5 dans le sens qui tend à augmenter le débit de carburant que le régulateur 4 envoie dans la conduite d'alimentation 3 en vue d'accélérer le réacteur, il en résulte une forte augmentation de la pression Pi du carburant dans la conduite 3 et dans la première chambre 10b de l'accumulateur 10 ; comme l'accroissement du débit des injecteurs tels que 2 provoque un accroissement correspondant de la pression P2 à la sortie du compresseur 1a, la relation (3) ci-dessus, mise par exemple sous la forme (4), montre que x augmente, c'est-à-dire que le piston 10a s'élève jusqu'à une nouvelle position d'équilibre, mais que l'augmentation $\Delta x$ correspondant à l'accroissement $\Delta Pi$ de la pression du carburant est plus faible que si la pression P2 n'était pas transmise à la seconde chambre 10c de l'accumulateur 10 ; on voit en effet facilement que, dans le cas de l'accumulateur hydraulique selon la présente invention, $\Delta x$ est proportionnel à $(\Delta Pi-\Delta P2)$. Par suite, non seulement l'accumulateur hydraulique du limiteur d'accélération selon la présente invention évite que le point de fonctionnement du turboréacteur ne dépasse la butée d'accélération B, comme on l'a expliqué précédemment à l'aide des diagrammes des figures 1 et 2, mais en outre, pour un dimensionnement déterminé de cet accumulateur hydraulique, correspondant aux valeurs choisies des constantes k, S et $(\Delta x)_M$, ledit accumulateur peut agir efficacement, de la façon indiquée, pour une plus grande gamme de variation de la pression Pi du carburant, comme le montre la relation (4), du fait que Pi et P2 varient dans le même sens, l'une et l'autre diminuant avec l'altitude. Dans les relations (3) et (4), le coefficient k désigne la raideur totale résultant de celle du ressort 10d d'une part, et d'autre part, du laminage de l'air à la pression P2 par le diaphragme 12 lors du déplacement du piston 10a ; cette dernière composante de la raideur k étant réglable en réception au moyen du diaphragme 12 lui-même, ce dernier permet d'adapter les conditions de fonctionnement du limiteur d'accélération selon la présente invention aux conditions effectives d'emploi du turboréacteur 1, notamment au plafond de l'avion sur lequel il est monté.

Si du carburant parvenait à contourner le joint dont est pourvu le piston 10a de l'accumulateur 10, et à pénétrer dans sa seconde chambre 10c, le clapet anti-retour 13 empêcherait le carburant d'être refoulé vers la sortie du compresseur, à travers le filtre 7 ; par contre, les fuites de carburant pourraient être dérivées vers l'atmosphère à travers les composants 12-11-15-14. Le rôle du diaphragme 15 est évidemment d'éviter la mise à la pression atmosphérique de la conduite 11 et de la seconde chambre 10c de l'accumulateur hydraulique 10.

La présente invention n'est pas limitée à la forme de réalisation précédemment décrite. Elle englobe toutes ses variantes. Les moyens prévus pour éviter le refoulement des fuites de carburant de l'accumulateur hydraulique vers la sortie du compresseur, et pour évacuer ces fuites sont matières à option. Il en est de même du diaphragme réglable 12 qui peut être supprimé. Le ressort 10d, agissant sur le piston 10a de l'accumulateur 10, dans le sens tendant à une réduction du volume de sa première chambre 10b peut être remplacé par des moyens élastiques équivalents. En fait, l'accumulateur hydraulique 10, à piston 10a, peut être remplacé par tout autre accumulateur hydraulique équivalent, d'un type connu. Plusieurs accumulateurs hydrauliques peuvent être connectés en parallèle, notamment en parallèle entre les conduites 3 et 11 de la figure 3. Enfin, le limiteur d'accélération selon la présente invention peut être associé à un circuit d'alimentation d'une turbomachine de type quelconque, éventuellement différent de celui illustré sur la figure 3 et précédemment décrit.

## Revendication

Limiteur d'accélération pour turboréacteur, comportant au moins un accumulateur hydraulique relié au circuit d'alimentation des injecteurs de carburant, dans lequel le piston (10a) de l'accumulateur hydraulique divise son cylindre en une première chambre (10b), reliée à un point (p1) du circuit d'alimentation (3) des injecteurs (2) situé juste en amont de ces derniers, et en une seconde chambre (10c) reliée à la sortie du compresseur (1a) par une conduite (11) et en outre des moyens élastiques (10d) agissent sur le piston (10a) de l'accumulateur (10) dans le sens tendant à une réduction du volume de sa première chambre (10b), caractérisé en ce que la conduite (11) reliant la seconde chambre (10c) de l'accumulateur (10) à la sortie du compresseur (1a) comporte :
— d'une part, un diaphragme (12) de préférence réglable,
— d'autre part, un clapet anti-retour (13),
— et enfin, en un point (p2) situé entre le clapet anti-retour (13) et le diaphragme réglable (12), une dérivation (14) qui communique avec l'atmosphère à travers un diagramme (15).

## Claim

Acceleration limiter for a gas turbine, comprising at least one hydraulic accumulator connected to the fuel injector supply circuit in which the piston (10a) of the hydraulic accumulator divides the cylinder into a first chamber (10b) connected to a point (p1) in the supply circuit (3) of the injectors (2) situated just upstream of latter, and a second chamber (10c) connected to the output of the compressor (1a) via a line (11) and furthermore resilient means (10d) acting on the piston (10a) of the accumulator (10) in the direction which tends to reduce the volume of its first chamber (10b), characterised in that the line (11) connecting the second chamber (10c) of the accumulator (10) to the output of the compressor (1a) comprises :
— firstly, a preferably adjustable diaphragm (12),
— secondly, a non-return valve (13),
— and finally, at a point (p2) situated between the non-return valve (13) and the adjustable diaphragm (12), a branch (14) which communicates with the atmosphere through a diaphragm (15).

## Patentanspruch

Beschleunigungsbegrenzer für eine Turbomaschine mit zumindest einem Druckspeicher, der mit einem Zuführungssystem für Kraftstoff-Einspritzdüsen verbunden ist, in dem der Kolben (10a) des Druckspeichers dessen Zylinder in eine erste Kammer (10b), die mit einem Punkt (p1) des Zuführungssystems (3) für die Einspritzdüsen (2) verbunden ist, der knapp oberhalb, nämlich stromaufwärts, der letzteren liegt, und eine zweite Kammer (10c), die mit dem Austrittsende eines Verdichters (1a) über eine Leitung (11) verbunden ist, unterteilt, und desweiteren mit elastischen Mitteln (10d), die auf den Kolben (10a) des Druckspeichers (10) im Sinne einer Veringerung des Volumens der ersten Kammer (10b) einwirken, dadurch gekennzeichnet, daß die Leitung (11), die die zweite Kammer (10c) des Druckspeichers (10) mit dem Austrittsende des Verdichters (1a) verbindet, folgende Elemente enthält :
— einerseits ein vorzugsweise einstellbares Plattenventil (12),
— anderseits ein Rückschlagventil (13)
— und schließlich an einem Punkt (p2), der zwischen dem Rückschlagventil (13) und dem einstellbaren Plattenventil (12) liegt, eine Abführungsleitung (14), die mit der Atmosphäre über ein Plattenventil (15) kommuniziert.

FIG.: 1

FIG.: 2

FIG.: 3